# EUROPÄISCHE PATENTANMELDUNG

(11) **EP 0 617 352 A2**
(43) Veröffentlichungstag der Anmeldung: **28.09.1994**
(21) Anmeldenummer: 94104363.0
(22) Anmeldetag: 19.03.1994
(51) Int. Cl.: G05D 23/19, F24D 19/10

(54) **Regel- und Steuergerät**

(30) Priorität: 23.03.1993 DE 9304265 U; 23.03.1993 DE 9304267 U
(71) Anmelder: VIESSMANN WERKE GmbH & CO., D-35107 Allendorf/Eder (DE)
(72) Erfinder: Arend, Hans-Otto, D-35108 Allendorf (DE); Skupin, Konrad, D-35088 Battenberg (DE)
(74) Vertreter: Wolf, Günter, Dipl.-Ing.

(57) **Zusammenfassung**

Die Erfindung bezieht sich auf ein Regel- und Steuergerät für Heizkessel, bestehend aus einem Gerätegehäuse (1), in und an dem eine Zeitschaltuhr (2) und andere der Regelung und Steuerung dienende Schalt- und Bedienungselemente angeordnet sind. Um sicherzustellen, daß die Laufgenauigkeit der Zeitschaltuhr immer gewährleistet ist und auch die Umschaltung der Uhr bei Zeitwechsel automatisch erfolgt, ist erfindungsgemäß die im Gerätegehäuse (1) angeordnete Zeitschaltuhr (2) mit einem Empfangsmodul (3) für das Funkuhrsignal DCF-77 versehen.

## Beschreibung

Die Erfindung betrifft ein Regel- und Steuergerät für Heizkessel gemäß Oberbegriff des Patentanspruches 1.

Regel- und Steuergeräte der genannten Art sind hinlänglich bekannt und in Benutzung, wobei unter Regel- und Steuergeräten hier bspw. auch sogenannte Uhrenthermostate zu verstehen sind. Solche Geräte, die entweder nur am Kessel selbst installiert oder aus dem Hauptgerät am Kessel und einem sogenannten Fernbedienungsteil oder auch aus einem in der Wohnung installierten und dort einstellbaren Uhrenthermostat bzw. Fernbedienung bestehen können, weisen eine Zeitschaltuhr auf, mit der bspw. automatisch die Periode der sogenannten Nachtabsenkung oder beim Uhrenthermostaten bestimmte Temperaturen zu bestimmten Zeiten vorgegeben bzw. eingestellt werden können. Eine möglichst exakte Genauigkeit der Uhr ist dabei wünschenswert, wobei die Zeitschaltuhr beim Wechsel von Sommer- auf Winterzeit und umgekehrt umgestellt werden muß, was häufig und zumindest über eine gewisse Zeitspanne übersehen wird. Abgesehen davon, daß es sich bei allen obengenannten Geräten um Regel- und Steuergeräte handelt, sei aber darauf hingewiesen, daß ein Fernbedienungsgerät immer nur in Verbindung mit dem Grundgerät zur Regelung und Steuerung funktioniert, während es sich bei einem Uhrenthermostaten um ein eigenständiges Gerät handelt.

Der Erfindung liegt die Aufgabe zugrunde, ein Regel- und Steuergerät der genannten Art dahingehend zu verbessern, daß eine exakte Genauigkeit der Zeitschaltuhr immer gewährleistet ist und auch die Umschaltung der Uhr bei Zeitwechsel automatisch erfolgt.

Diese Aufgabe ist mit einem Regel- und Steuergerät der eingangs genannten Art nach der Erfindung dadurch gelöst, daß im Gerätegehäuse die Zeitschaltuhr mit einem Empfangsmodul für das sogenannte Funksignal DCF-77 gekoppelt ist.

Bei diesem Funkuhrsignal DCF-77 handelt es sich um ein Signal, das von einer exakt laufenden Zentraluhr ausgesendet wird und auch der Allgemeinheit zur Verfügung steht, d.h. jede sogenannte und zumindest öffentliche Normaluhr wird mit diesem Signal angesteuert. Für den vorliegenden Fall wird also dieses Funksignal ebenfalls ausgenutzt und stellt damit sicher, daß insbesondere bei Zeitumstellungen die Heizung ebenfalls via Regel- und Steuergerät entsprechend und automatisch umgestellt wird, wobei aber gleichzeitig auch die Zeitschaltuhr synchronisiert werden kann und eine exakte Uhrzeit gewährleistet ist. Sofern dem Regel-und Steuergerät (Hauptgerät) ein Fernbedienungsteil zugeordnet ist, kann die Zeitschaltuhr mit dem Empfangsmodul genauso gut auch im Fernbedienungsteil angeordnet werden.

Sofern es sich beim Regel- und Steuergerät um einen Uhrenthermostaten handelt, so wird dieser mit dem eigentlichen Regelungs- und Steuergerät des Heizkessels durch Kabel verbunden. An sich erfüllen solche Uhrenthermostate durchaus ihre Funktion. Nachteilig ist dabei ihre - soweit bekannt - notwendige Verkabelung mit dem Regel-und Steuergerät am entfernt installierten Heizkessel, ihre Netzgebundenheit und ferner die Notwendigkeit, wie vorerwähnt, zumindest bei Wechsel von Sommerauf Winterzeit und umgekehrt, die Uhr umstellen zu müssen. Um eine exakte Uhrzeit und automatische Umschaltbarkeit zu gewährleisten, wird diese Geräteart erfindungsgemäß in gleicher Weise ausgestattet, wie vorerwähnt, d.h. mit einem mit Zeitschaltuhr gekoppelten Empfangsmodul.

Vorteilhafte Ausgestaltungen bezüglich dieser speziellen Regelgeräteart bestehen darin, daß im Gehäuse Aufnahmegefache für den Einsatz einer Batterie, des Empfangsmoduls für das Funkuhrsignal DCF-77 und den wahlweisen Einsatz eines Relais- oder Sendemoduls angeordnet sind.

Vorteilhaft sind dabei die Aufnahmegefache gehäusevorderwandseitig bzw. gehäuserückwandseitig angeordnet und mit Deckeln verschließbar ausgebildet.

In Rücksicht auf den vorgesehenen Batteriebetrieb ist vorgesehen, daß in der Frontfläche im Display oder im Gehäuse ein Minderspannungsanzeigeelement akustischer und optischer Art angeordnet ist. Der vorgesehene Batteriebetrieb macht den Uhrenthermostaten außerdem netzunabhängig, d.h. insoweit ist gewährleistet, daß die Uhr für die Lebensdauer der Batterie läuft, die sonst bei Netzausfall stehenbleibt und dann mit falscher Zeit weiterläuft.

Die Anordnung eines Gefaches für den wahlweisen Einsatz eines Relais- oder Sendemoduls bietet die Möglichkeit, den Uhrenthermostaten entweder und wie gehabt mit dem Regel- und Steuergerät zu verkabeln oder die zu übermittelnden Daten per Funk an das Regel- und Steuergerät zu übermitteln, das dafür natürlich mit einem geeigneten Empfänger ausgerüstet sein muß.

Das erfindungsgemäße Regel- und Steuergerät wird nachfolgend anhand der zeichnerischen Darstellung von Ausführungsbeispielen näher erläutert.

Es zeigt stark schematisiert
Fig. 1 das Gehäuse eines Regel- und Steuergerätes;
Fig. 2 ein zum Regel- und Steuergerät gehörendes Fernbedienungsteil;
Fig. 3 die Vorderseite eines als Uhrenthermostaten ausgebildeten Regelgerätes und
Fig. 4 das Gerät nach Fig. 3 in Rückansicht.

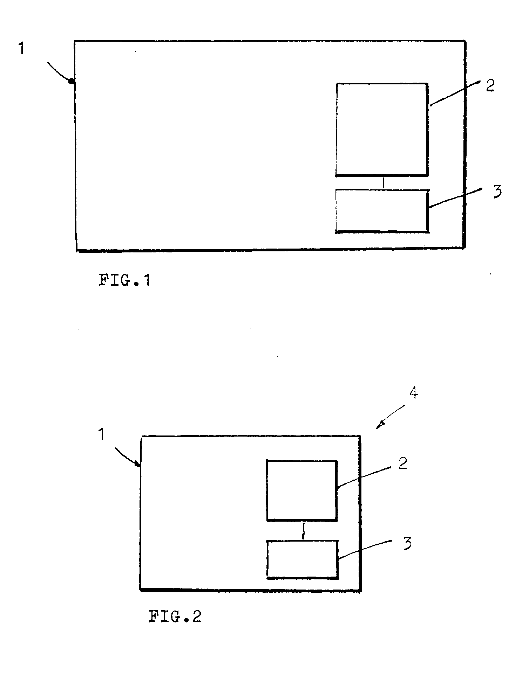

Einer ins einzelne gehenden Beschreibung des Regel- und Steuergerätes (Fig. 1) bzw. des zugehörigen Fernbedienungsteils (Fig. 2) bedarf es dabei nicht, da solche Geräte bekannt sind, wobei, wenn das Gerät mit Fernbedienungsteil 4 ausgestattet ist, diese als Einheit betrachtet werden müssen. Wesentlich ist in beiden Fällen nur, daß in einem und/oder anderen Teil der dort ebenfalls in einem und/oder anderen Teil vorhandenen Zeitschaltuhr 2 ein Empfangsmodul 3 für das Funkuhrsignal DCF-77 dem jeweili gen Gerätegehäuse 1 zugeordnet und dieses mit der Zeitschaltuhr 2 gekoppelt ist.

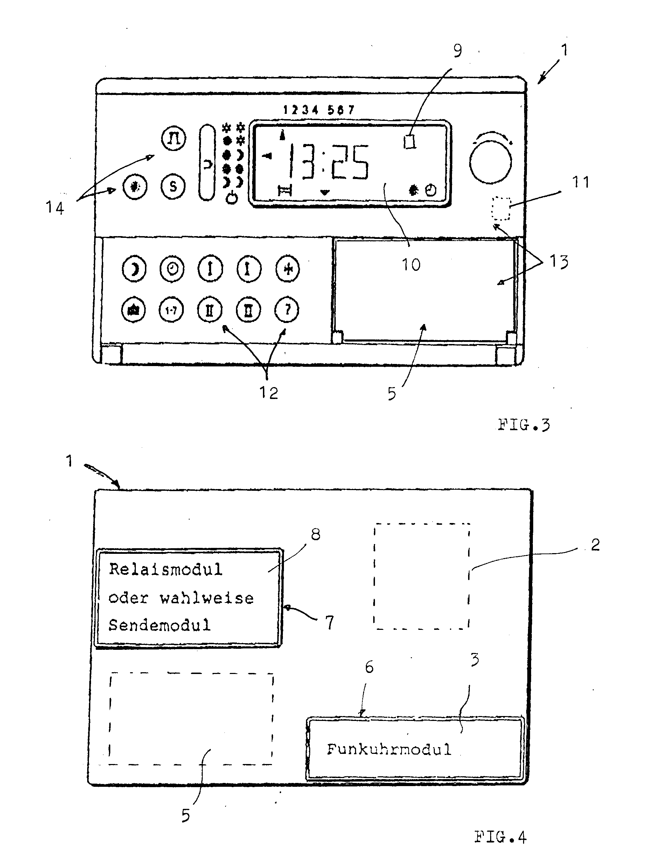

Beim Ausführungsbeispiel nach den Fig. 3, 4 handelt es sich um einen Uhrenthermostaten, bestehend aus ebenfalls einem Gerätegehäuse 1 mit Zeitschaltuhr 2 und Thermostaten 11 bzw. Temperatur-Sensor und mit einer Anzeige- und Bedienungselemente 12 aufweisenden Frontfläche 13. Wie insbesondere aus Fig. 4 ersichtlich, sind im Gehäuse Aufnahmegefache 5, 6, 7 für den Einsatz einer Batterie, eines Empfangsmoduls 3 für das Funkuhrsignal DCF-77 und dem wahlweisen Einsatz eines Relais- oder Sendemoduls 8 angeordnet. Ferner ist in der Frontfläche 13 ein Minderspannungsanzeigeelement 9 vorgesehen, das rechtzeitig ein optisches Signal über eine gewisse Periode (bspw. 12 Stunden) noch abzugeben in der Lage ist, ehe sich die Batterie total erschöpft hat. Das Aufnahmegefach 5 für die Batterie ist vorteilhaft von der frontfläche 13 aus zugänglich, und das Minderspannungsanzeigeelement 9 bzw. Minderspannungssymbol ist im Display 10 mit integriert.

Eine vorteilhafte Weiterbildung besteht ferner darin, daß die Zeitschaltuhr 2 und der Thermostat 11 mit einem gemeinsamen, vorerwähnten Display 10 verbunden ist. Damit entfällt die Notwendigkeit, für die wünschenswerte Temperaturanzeige ein besonderes Element anzuordnen, und der damit gewonnene Raum kann ohne bzw. ohne wesentliche Vergrößerung des Gerätegehäuses 1 für eines der notwendigen Aufnahmegefache 5, 6, 7 genutzt werden.

Die Kopplung von Zeitschaltuhr 2 und Thermostaten mit dem kleinen Display 10 ist dabei so gestaltet, daß Temperaturdaten nach Betätigung der Schaltknöpfe 14 statt der laufend angezeigten Zeitwerte dargestellt werden.

## Patentansprüche

1. Regel- und Steuergerät für Heizkessel, bestehend aus einem Gerätegehäuse (1), in und an dem eine Zeitschaltuhr (2) und andere der Regelung und Steuerung dienende Bedienungs- und Anzeigeelemente angeordnet sind,
dadurch gekennzeichnet,
daß im Gerätegehäuse (1) die Zeitschaltuhr (2) mit einem Empfangsmodul (3) für das Funkuhrsignal DCF-77 angeordnet ist.

2. Gerät nach Anspruch 1,
dadurch gekennzeichnet,
daß dem Gerät ein Fernbedienungsteil (4) zugeordnet und in diesem oder im Gerätegehäuse (1) die Zeitschaltuhr (2) mit dem Empfangsmodul (3) angeordnet ist.

3. Gerät nach Anspruch 1,
dadurch gekennzeichnet,
daß im Gerätegehäuse (1) des als Uhrenthermostaten ausgebildeten Gerätes Aufnahmegefache (5, 6, 7) für den Einsatz einer Batterie, des Empfangsmoduls (3) für das Funkuhrsignal DCF-77 und den wahlweisen Einsatz eines Relais- oder Sendemoduls (8) angeordnet sind.

4. Gerät nach Anspruch 3,
dadurch gekennzeichnet,
daß die Aufnahmegefache (6, 7) gehäuserückwandseitig und das Gefach (5) für die Batteriegehäuse vorderwandseitig angeordnet und mit Deckeln verschließbar ausgebildet sind.

5. Gerät nach Anspruch 3 oder 4,
dadurch gekennzeichnet,
daß in der Frontfläche (13) bzw. im Gehäuse (1) ein Minderspannungsanzeigeelement (9) angeordnet ist.

6. Gerät nach Anspruch 5,
dadurch gekennzeichnet,
daß das Minderspannungsanzeigeelement (9) im als Display (10) ausgebildeten Anzeigeelement angeordnet ist.

7. Gerät nach einem der Ansprüche 3 bis 6,
dadurch gekennzeichnet,
daß die Zeitschaltuhr (2) und der Thermostat (11) mit dem gemeinsamen Display (10) verbunden sind.

8. Gerät nach Anspruch 2,
dadurch gekennzeichnet,
daß im Gehäuse (1) des Fernbedienungsteiles (4) ein Aufnahmegefach für den Einsatz des Empfangsmoduls (3) für das Funkuhrsignal DCF-77 angeordnet ist.
